# EUROPEAN PATENT APPLICATION

(11) **EP 3 361 261 A1**
(43) Date of publication of application: **15.08.2018**
(21) Application number: 16853707.4
(22) Date of filing: 06.10.2016
(51) Int. Cl.: G01N 35/04

(54) **SPECIMEN RACK TRANSFER DEVICE AND AUTOMATIC ANALYSIS SYSTEM**

(30) Priority: 07.10.2015 JP 2015199586
(71) Applicant: Jeol Ltd., Akishima-shi, Tokyo 196-8558 (JP); Fujirebio Inc., Tokyo 163-0410 (JP)
(72) Inventor: ABE Naoyuki, Akishima-shi Tokyo 196-8558 (JP)
(74) Representative: Boult Wade Tennant LLP
(86) International application number: PCT/JP2016/079819
(87) International publication number: WO 2017/061555

(57) **Abstract**

A specimen rack transfer device 30 is provided with a tray section 51, a pusher mechanism 53, a transfer lane 34, a guide rail 54, and a guide rail moving mechanism 55. The pusher mechanism transfers, in the first direction X, a specimen rack 90 placed on the tray section 51. The transfer lane 34 transfers the specimen rack 90 in the second direction Y. The guide rail is provided on the tray section. Furthermore, the movable mechanism 55 supports the guide rail 54 such that the guide rail can move in the first direction X.

## Description

### Technical Field

The present invention relates to a specimen rack transfer device for transferring a specimen rack in which specimen containers are stored and also to an automatic analysis system including this specimen rack transfer device.

### Background Art

Hitherto, an automatic analysis apparatus for quantitatively measuring specific substances contained in a specimen, which is a biological specimen, such as blood and urine, is known. The automatic analysis apparatus utilizes specimen containers for storing specimens therein. Such an automatic analysis apparatus includes a specimen storage unit in which plural specimen containers are stored and a reaction unit in which a specimen and a reagent are caused to react with each other.

A specimen rack transfer device for transferring specimen containers to the specimen storage unit of the automatic analysis apparatus is also known. The specimen rack transfer device transfers plural specimen containers which are stored in a specimen rack.

As a known specimen rack transfer device, the technology disclosed in PTL 1, for example, is disclosed. The technology disclosed in PTL 1 describes a transfer device including a first conveyor and a second conveyor disposed along the direction of a main transfer path and a third conveyor disposed in parallel with the first conveyor and the second conveyor. A first joining table is provided between the first conveyor and the third conveyor. A second joining table is provided between the third conveyor and the second conveyor. A rail, which is inserted into a groove formed at the bottom portion of a specimen rack, is provided on each of the first joining table and the second joining table.

### Citation List

### Patent Literature

PTL 1: Japanese Unexamined Patent Application Publication No. 2010-91417

### Summary of Invention

### Technical Problem

In the specimen rack transfer device according to the technology disclosed in PTL 1, however, the rail, which is inserted into the groove formed in a specimen rack, is provided only on the first joining table and the second joining table. Because of this configuration, when a specimen rack is transferred from the first joining table to the third conveyor, that is, when the transfer direction of the specimen rack is switched, it is necessary to remove the specimen rack from the rail and then place it back onto the third conveyor. In the technology disclosed in PTL 1, therefore, a specimen rack may fall down when the transfer direction of the specimen rack is switched.

In view of the above-described problem, it is an object of the present invention to provide a specimen rack transfer device and an automatic analysis system that can prevent a specimen rack from falling down when the transfer direction of the specimen rack is switched.

### Solution to Problem

To solve the above-described problem and to achieve the above-described object of the present invention, a specimen rack transfer device according to the present invention includes a tray section, a pusher mechanism, a transfer lane, a guide rail, and a guide rail movable mechanism. On the tray section, a specimen rack for storing a plurality of specimen containers is placed. The pusher mechanism transfers the specimen rack placed on the tray section along a first direction which intersects a direction in which the plurality of specimen containers are arranged. The transfer lane is disposed on a first side of the first direction with respect to the tray section and transfers the specimen rack along a second direction which is perpendicular to the first direction. The guide rail is provided on the tray section. The guide rail slidably engages with an engagement groove of the specimen rack so as to guide the specimen rack along the first direction. The engagement groove is provided in a bottom end portion of the specimen rack in a top-bottom direction. The guide rail movable mechanism supports at least part of the guide rail such that the at least part of the guide rail is movable along the first direction.

An automatic analysis system according to the present invention includes an automatic analysis apparatus and a specimen rack transfer device. The automatic analysis apparatus analyzes a specimen stored in a specimen container. The specimen rack transfer device transfers a specimen rack in which the specimen container is stored. As the specimen rack transfer device, the above-described specimen rack transfer device is used.

### Advantageous Effects of Invention

In the specimen rack transfer device and the automatic analysis system according to the present invention, it is possible to prevent a specimen rack from falling down when the transfer direction of the specimen rack is switched. Brief Description of Drawings

[Fig. 1] Fig. 1 is a plan view schematically illustrating an automatic analysis system according to an embodiment of the present invention.
[Fig. 2] Fig. 2 is a perspective view illustrating a specimen rack transfer device according an embodiment of the present invention.
[Fig. 3] Fig. 3 is a plan view illustrating the specimen rack transfer device according to the embodiment of the present invention.
[Fig. 4] Fig. 4 is a perspective view illustrating a specimen rack.
[Fig. 5] Fig. 5 is a perspective view illustrating a first tray section of the specimen rack transfer device according to the embodiment of the present invention.
[Fig. 6] Fig. 6 is a perspective view illustrating a guide rail movable mechanism of the specimen rack transfer device according to the embodiment of the present invention.
[Fig. 7] Fig. 7 is a perspective view illustrating a state in which a guide rail of the specimen rack transfer device according to the embodiment of the present invention is moved.
[Fig. 8] Fig. 8 is a flowchart illustrating an operation of the specimen rack transfer device according to the embodiment of the present invention.
[Fig. 9] Fig. 9 is a view for explaining major part of the operation of the specimen rack transfer device according to the embodiment of the present invention.
[Fig. 10] Fig. 10 is a view for explaining major part of the operation of the specimen rack transfer device according to the embodiment of the present invention.
[Fig. 11] Fig. 11 is a view for explaining major part of the operation of the specimen rack transfer device according to the embodiment of the present invention. Description of Embodiments

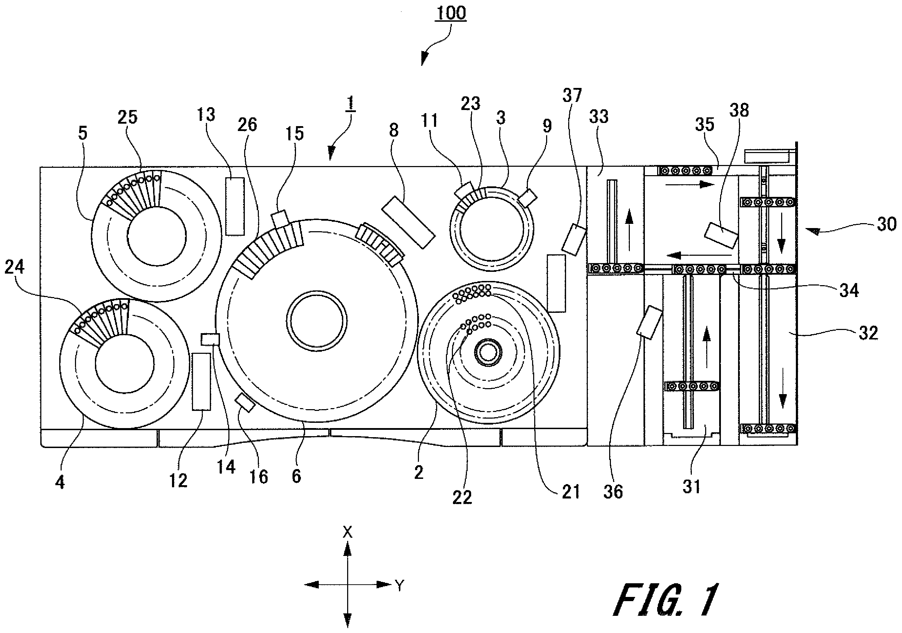

An embodiment of a specimen rack transfer device and an automatic analysis system according to the present invention will be described below with reference to Figs. 1 through 11. The same member illustrated in the individual drawings is designated by like reference numeral. The embodiment will be described in the following order. However, the present invention is not necessarily restricted to the following embodiment.

### [Embodiment]

### 1-1. Configuration of Automatic Analysis System

The automatic analysis system according to an embodiment of the present invention (hereinafter called "this embodiment") will first be described below with reference to Fig. 1.

Fig. 1 schematically illustrates the automatic analysis system according to this embodiment.

The apparatus shown in Fig. 1 is a biochemical analysis system 100 which is applied as an example of the automatic analysis system according to the present invention. The biochemical analysis system 100 is an apparatus for automatically measuring the quantities of specific components contained in a biological specimen, such as blood or urine.

As shown in Fig. 1, the biochemical analysis system 100 includes a biochemical analysis apparatus 1 and a specimen rack transfer device 30. The biochemical analysis apparatus 1 automatically measures the quantities of specific components contained in biological specimens. The specimen rack transfer device 30 transfers specimen racks.

### 1-2. Configuration of Biochemical Analysis Apparatus

The biochemical analysis apparatus 1 includes a sample turn table 2, a dilution turn table 3, a first reagent turn table 4, a second reagent turn table 5, and a reaction turn table 6. The biochemical analysis apparatus 1 also includes a sample dilution pipette 7, a sampling pipette 8, a dilution stirring device 9, a dilution cleaning device 11, a first reagent pipette 12, a second reagent pipette 13, a first reaction stirring device 14, a second reaction stirring device 15, a multi-wavelength photometer 16, and a reaction-container cleaning device 18.

The sample turn table 2, which is an example of a specimen storage unit of this embodiment, is formed as a container in a substantially cylindrical shape with one end opened in the axial direction. In this sample turn table 2, plural specimen containers 21 and plural diluent containers 22 are stored. Specimens (samples), such as blood and urine, are stored in the specimen containers 21. In the diluent containers 22, special diluents other than saline solution, which is a typical diluent, are stored.

The plural specimen containers 21 are disposed with predetermined spaces therebetween in the circumferential direction of the sample turn table 2. The specimen containers 21 disposed in the circumferential direction of the sample turn table 2 are arranged in two rows in the radial direction of the sample turn table 2 with predetermined spaces therebetween.

The plural diluent containers 22 are disposed farther inward in the radial direction than the plural rows of specimen containers 21. The plural diluent containers 22, as well as the plural specimen containers 21, are disposed with predetermined spaces therebetween in the circumferential direction of the sample turn table 2. The diluent containers 22 disposed in the circumferential direction of the sample turn table 2 are arranged in two rows in the radial direction of the sample turn table 2 with predetermined spaces therebetween.

Each set of the plural specimen containers 21 and the plural diluent containers 22 may not necessarily be disposed in two rows. Each set of the plural specimen containers 21 and the plural diluent containers 22 may be disposed in one row or in three or more rows in the radial direction of the sample turn table 2.

The sample turn table 2 is supported by a drive mechanism, which is not shown, such that it is rotatable in the circumferential direction. The sample turn table 2 is rotated by the drive mechanism, which is not shown, at a predetermined speed by every predetermined angle range in the circumferential direction. The dilution turn table 3 is disposed near the sample turn table 2.

As in the sample turn table 2, the dilution turn table 3, the first reagent turn table 4, the second reagent turn table 5, and the reaction turn table 6 are each formed as a container in a substantially cylindrical shape with one end opened in the axial direction. The dilution turn table 3 and the reaction turn table 6 are rotated by the drive mechanism, which is not shown, at a predetermined speed by every predetermined angle range in the circumferential direction. The reaction turn table 6 is set to be rotated by half revolution or greater at one time.

In the dilution turn table 3, plural dilution containers 23 are stored sequentially in the circumferential direction of the dilution turn table 3. In the dilution containers 23, specimens which are sucked from the specimen containers 21 disposed in the sample turn table 2 and are diluted (hereinafter such specimens will be called "diluted specimens") are stored.

In the first reagent turn table 4, plural first reagent containers 24 are stored sequentially in the circumferential direction of the first reagent turn table 4. In the second reagent turn table 5, plural second reagent containers 25 are stored sequentially in the circumferential direction of the second reagent turn table 5. A concentrated first reagent is stored in the first reagent containers 24, while a concentrated second reagent is stored in the second reagent containers 25.

The first reagent turn table 4, the first reagent containers 24, the second reagent turn table 5, and the second reagent containers 25 are maintained at a predetermined temperature by a cooling mechanism, which is not shown. The first reagent stored in the first reagent containers 24 and the second reagent stored in the second reagent containers 25 are accordingly cooled at a predetermined temperature.

The reaction turn table 6, which is an example of a reaction unit of this embodiment, is disposed between the dilution turn table 3 and the first and second reagent turn tables 4 and 5. In the reaction turn table 6, plural reaction containers 26 are stored sequentially in the circumferential direction of the reaction turn table 6. Diluted specimens extracted from the dilution containers 23 in the dilution turn table 3, the first reagent extracted from the first reagent containers 24 in the first reagent turn table 4, and the second reagent extracted from the second reagent containers 25 in the second reagent turn table 5 are poured into the reaction containers 26. In the reaction containers 26, the diluted specimens are stirred with the first and second reagents so that they can react with each other.

The sample dilution pipette 7 is disposed near the sample turn table 2 and the dilution turn table 3. The sample dilution pipette 7 is supported by a dilution pipette drive mechanism, which is not shown, such that it is movable in the axial direction (top-bottom direction, for example) of the sample turn table 2 and the dilution turn table 3. The sample dilution pipette 7 is also supported by the dilution pipette drive mechanism such that it is shiftable along a horizontal direction substantially parallel with the openings of the sample turn table 2 and the dilution turn table 3. By shifting along the horizontal direction, the sample dilution pipette 7 reciprocates between the sample turn table 2 and the dilution turn table 3. When the sample dilution pipette 7 shifts between the sample turn table 2 and the dilution turn table 3, it passes through a cleaning device, which is not shown.

The operation of the sample dilution pipette 7 will be described below.

When the sample dilution pipette 7 has reached a predetermined position above the opening of the sample turn table 2, it moves down along the axial direction of the sample turn table 2 and inserts a pipette portion provided at the tip of the sample dilution pipette 7 into a specimen container 21. At this time, a sampling pump, which is not shown, is activated, and the sample dilution pipette 7 sucks a predetermined amount of specimen stored in the specimen container 21. Then, the sample dilution pipette 7 moves up along the axial direction of the sample turn table 2 and removes the pipette portion from the specimen container 21. The sample dilution pipette 7 then shifts along the horizontal direction and moves to a predetermined position above the opening of the dilution turn table 3.

Then, the sample dilution pipette 7 moves down along the axial direction of the dilution turn table 3 and inserts the pipette portion into a predetermined dilution container 23. The sample dilution pipette 7 then ejects the sucked specimen and a predetermined amount of diluent (saline solution, for example) supplied from the sample dilution pipette 7 to the dilution container 23. As a result, the specimen is diluted by a predetermined dilution factor. The sample dilution pipette 7 is then cleaned by the cleaning device.

The sampling pipette 8 is disposed between the dilution turn table 3 and the reaction turn table 6. As in the sample dilution pipette 7, the sampling pipette 8 is supported by a sampling pipette drive mechanism, which is not shown, such that it is movable in the axial direction (top-bottom direction) of the dilution turn table 3 and is shiftable in the horizontal direction. The sampling pipette 8 reciprocates between the dilution turn table 3 and the reaction turn table 6.

The sampling pipette 8 inserts its pipette portion into a dilution container 23 in the dilution turn table 3 and sucks a predetermined amount of diluted specimen. Then, the sampling pipette 8 ejects the sucked diluted specimen to a reaction container 26 in the reaction turn table 6.

The first reagent pipette 12 is disposed between the reaction turn table 6 and the first reagent turn table 4, while the second reagent pipette 13 is disposed between the reaction turn table 6 and the second reagent turn table 5. The first reagent pipette 12 is supported by a first reagent pipette drive mechanism, which is not shown, such that it is movable in the axial direction (top-bottom direction) of the reaction turn table 6 and is shiftable in the horizontal direction. The first reagent pipette 12 reciprocates between the first reagent turn table 4 and the reaction turn table 6.

The first reagent pipette 12 inserts its pipette portion into a first reagent container 24 in the first reagent turn table 4 and sucks a predetermined amount of first reagent. Then, the first reagent pipette 12 ejects the sucked first reagent to a reaction container 26 in the reaction turn table 6.

As in the first reagent pipette 12, the second reagent pipette 13 is supported by a second reagent pipette drive mechanism, which is not shown, such that it is movable in the axial direction (top-bottom direction) of the reaction turn table 6 and is shiftable in the horizontal direction. The second reagent pipette 13 reciprocates between the second reagent turn table 5 and the reaction turn table 6.

The second reagent pipette 13 inserts its pipette portion into a second reagent container 25 in the second reagent turn table 5 and sucks a predetermined amount of second reagent. Then, the second reagent pipette 13 ejects the sucked second reagent to a reaction container 26 in the reaction turn table 6.

The dilution stirring device 9 and the dilution cleaning device 11 are disposed on the peripheral side of the dilution turn table 3. The dilution stirring device 9 inserts a stirrer, which is not shown, into a dilution container 23 and stirs a specimen with a diluent.

The dilution cleaning device 11 is a device for cleaning dilution containers 23 from which diluted specimens have been sucked by the sampling pipette 8. The dilution cleaning device 11 has plural dilution-container cleaning nozzles. The plural dilution-container cleaning nozzles are connected to a waste liquid pump, which is not shown, and a detergent pump, which is not shown. The dilution cleaning device 11 inserts the dilution-container cleaning nozzles into the dilution containers 23, and drives the waste liquid pump to suck diluted specimens which remain within the dilution containers 23 by using the inserted dilution-container cleaning nozzles. The dilution cleaning device 11 then discharges the sucked diluted specimens to a waste liquid tank, which is not shown.

Thereafter, the dilution cleaning device 11 supplies a detergent to the dilution-container cleaning nozzles from the detergent pump, and ejects the detergent from the dilution-container cleaning nozzles to the dilution containers 23 so as to clean the dilution containers 23. The dilution cleaning device 11 then sucks the detergent by using the dilution-container cleaning nozzles to dry the dilution containers 23.

The first reaction stirring device 14, the second reaction stirring device 15, and the reaction-container cleaning device 18 are disposed on the peripheral side of the reaction turn table 6. The first reaction stirring device 14 inserts a stirrer, which is not shown, into a reaction container 26 and stirs a diluted specimen with the first reagent. This achieves uniform and speedy reaction of the diluted specimen with the first reagent. The configuration of the first reaction stirring device 14 is the same as that of the dilution stirring device 9, and an explanation thereof will thus be omitted.

The second reaction stirring device 15 inserts a stirrer, which is not shown, into a reaction container 26 and stirs a diluted specimen, the first reagent, and the second reagent with each other. This achieves uniform and speedy reaction of the diluted specimen with the first reagent and the second reagent. The configuration of the second reaction stirring device 15 is the same as that of the dilution stirring device 9, and an explanation thereof will thus be omitted.

The reaction-container cleaning device 18 is a device for cleaning reaction containers 26 within which specimens have been examined. The reaction-container cleaning device 18 has plural reaction-container cleaning nozzles. The plural reaction-container cleaning nozzles, as well as the dilution-container cleaning nozzles, are connected to a waste liquid pump, which is not shown, and a detergent pump, which is not shown. A cleaning process of the reaction-container cleaning device 18 is similar to that of the above-described dilution cleaning device 11, and an explanation thereof will thus be omitted.

The multi-wavelength photometer 16 is disposed such that it opposes the outer wall of the reaction turn table 6 on the peripheral side thereof. The multi-wavelength photometer 16 is inserted into a reaction container 26 to make optical measurements to a diluted specimen reacted with the first reagent and the second reagent. The multi-wavelength photometer 16 then outputs the quantities of various components in the specimen as numeric data in the form of "absorbance" so as to detect the reaction state of the diluted specimen.

A constant-temperature bath, which is not shown, is disposed on the peripheral side of the reaction turn table 6. This constant-temperature bath maintains the inside of the reaction containers 26 provided in the reaction turn table 6 at a constant temperature.

### 1-3. Configuration of Specimen Rack Transfer Device

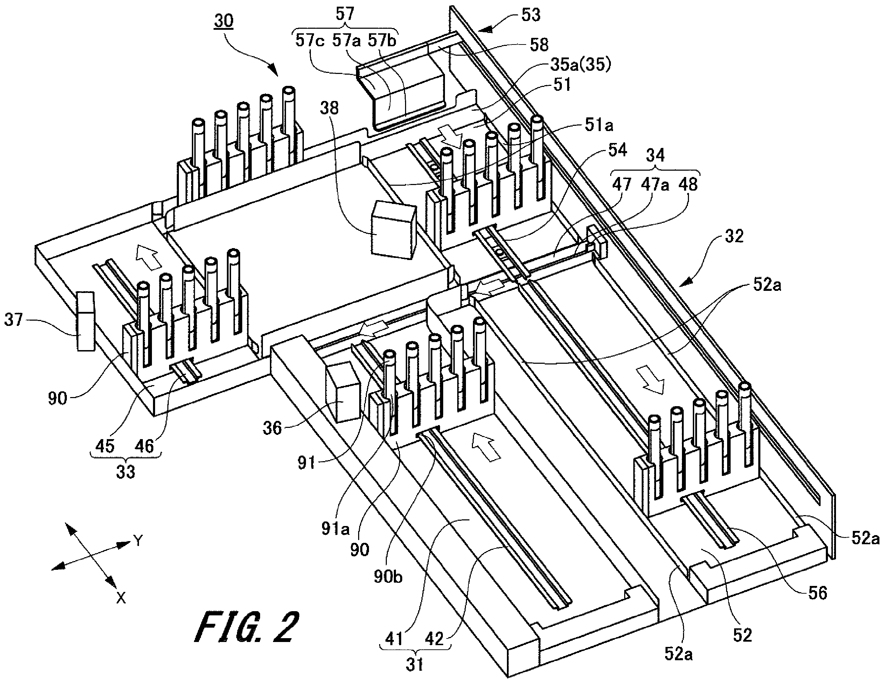

The detailed configuration of the specimen rack transfer device (hereinafter simply called "the transfer device") 30 will now be described below with reference to Figs. 2 through 6.

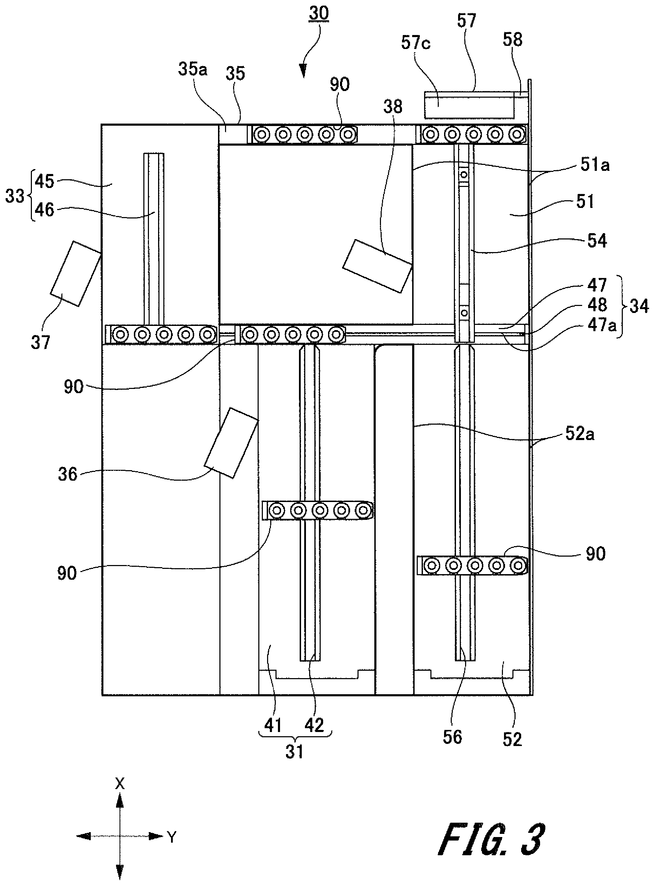

Fig. 2 is a perspective view of the specimen rack transfer device 30. Fig. 3 is a plan view of the specimen rack transfer device 30.

As shown in Figs. 1 through 3, the transfer device 30 is disposed adjacent to the biochemical analysis apparatus 1. The transfer device 30 supplies specimens to the specimen containers 21 stored in the sample turn table 2 or to the dilution containers 23 stored in the dilution turn table 3. Specimens to be supplied to the specimen containers 21 or the dilution containers 23 are stored in rack-side specimen containers 91. The rack-side specimen containers 91 are stored in a specimen rack 90. An identifier 91a indicating information concerning a specimen stored in a rack-side specimen container 91 is appended to the rack-side specimen container 91. As the identifier 91a, for example, a barcode, a two-dimensional code, or various other forms may be used.

### [Specimen Rack]

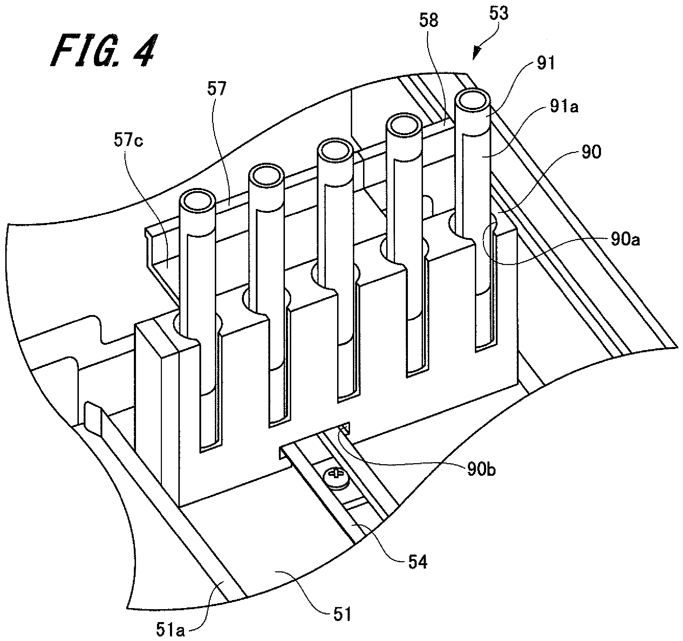

The configuration of the specimen rack 90 will be discussed below with reference to Fig. 4.

Fig. 4 is a perspective view of the specimen rack 90.

As shown in Fig. 4, the specimen rack 90 is formed in a substantially rectangular parallelepiped. In the specimen rack 90, plural storage portions 90a are formed for storing the rack-side specimen containers 91. The storage portion 90a is a hole for holding a rack-side specimen container 91 in an erection state in which the opening of the rack-side specimen container 91 faces upward in the top-bottom direction. The plural storage portions 90a are formed along the longitudinal direction of the specimen rack 90 with predetermined spaces therebetween.

In the specimen rack 90 in this embodiment, five storage portions 90a are provided. However, the specimen rack 90 is not restricted to this configuration. Four or less or six or more storage portions 90a may be provided.

An engagement groove 90b is formed at the bottom end portion of the specimen rack 90 in the top-bottom direction, that is, at the end portion opposite the end portion at which the storage portions 90a are formed. The engagement groove 90b is formed substantially at the center of the specimen rack 90 in the longitudinal direction. This engagement groove 90b is a groove continuously formed along the widthwise direction, that is, the short direction, of the specimen rack 90. The engagement groove 90b engages with a guide rail provided in the transfer device 30, which will be discussed later.

### [Specimen Rack Transfer Device]

The transfer device 30 for transferring the above-described specimen rack 90 will be discussed below.

A direction which is parallel with the horizontal direction and which is also perpendicular to a direction in which the transfer device 30 and the biochemical analysis apparatus 1 are adjacent to each other, which is parallel with the horizontal direction, is set to be a first direction X. A direction which is parallel with the horizontal direction and which is perpendicular to the first direction X is set to be a second direction Y.

As shown in Figs. 2 and 3, the transfer device 30 includes a supply unit 31, a recovery unit 32, a specimen loading unit 33, a first transfer lane 34, and a second transfer lane 35. The transfer device 30 also includes a first reader 36, a second reader 37, and a third reader 38. The first reader 36, the second reader 37, and the third reader 38 are barcode readers, for example, and read the identifiers 91a appended to the rack-side specimen containers 91.

The recovery unit 32 is disposed on a first side of the second direction Y with respect to the transfer device 30. The specimen loading unit 33 is disposed on a second side of the second direction Y with respect to the transfer device 30, that is, on a side closer to the biochemical analysis apparatus 1. The supply unit 31 is disposed closer to the second side of the second direction Y than the recovery unit 32 is. The supply unit 31 is also disposed closer to the first side of the second direction Y and closer to a first side of the first direction X than the specimen loading unit 33 is.

The supply unit 31 includes a supply tray 41, a supply-side guide rail 42, and a supply-side pusher mechanism, which is not shown. A specimen rack 90 is placed on the supply tray 41. In this specimen rack 90, rack-side specimen containers 91 containing specimens to be supplied to the biochemical analysis apparatus 1 are stored. In this case, the specimen rack 90 is placed so that the longitudinal direction thereof, that is, the direction in which the rack-side specimen containers 91 are arranged, will be substantially parallel with the second direction Y.

The supply tray 41 is formed in a substantially planar shape. Both end portions of the supply tray 41 in the second direction Y bend substantially vertically facing upward in the top-bottom direction. The bending end portions of the supply tray 41 oppose both end portions of the specimen rack 90 in the longitudinal direction placed in the supply tray 41. That is, the end portions of the supply tray 41 serve as guide strips for transferring the specimen rack 90.

The supply-side guide rail 42 is disposed substantially at the center of the supply tray 41 in the second direction Y. The supply-side guide rail 42 is disposed in parallel with the first direction X on one surface of the supply tray 41. The engagement groove 90b of a specimen rack 90 slidably engages with the supply-side guide rail 42. The supply-side guide rail 42 prevents a specimen rack 90 from falling down and also guides the movement of the specimen rack 90.

The supply-side pusher mechanism, which is not shown, pushes and transfers a specimen rack 90 which is placed on the supply tray 41 and which is engaged with the supply-side guide rail 42 from the first side to a second side of the first direction X with respect to the supply tray 41. In this case, the specimen rack 90 is transferred in substantially parallel with the short direction of the specimen rack 90.

The first reader 36 is disposed near the supply unit 31. The first reader 36 reads the identifier 91a appended to the rack-side specimen container 91 supplied to the supply unit 31.

The first transfer lane 34 is disposed on the second side of the first direction X with respect to the supply unit 31, that is, on the discharge side of the supply unit 31 from which a specimen rack 90 is discharged. The first transfer lane 34 transfers a specimen rack 90 discharged from the supply unit 31 to the specimen loading unit 33.

The first transfer lane 34 includes a mounting surface portion 47, a transfer-side pusher 48, and a transfer-side drive mechanism for driving the transfer-side pusher 48, which is not shown. The mounting surface portion 47 is formed in a planar shape. The mounting surface portion 47 extends from the recovery unit 32 to the specimen loading unit 33 along the second direction Y by passing by the supply unit 31. The mounting surface portion 47 on the first side of the second direction Y is disposed between a first recovery tray 51 and a second recovery tray 52 of the recovery unit 32, which will be discussed later.

A groove 47a is formed in the mounting surface portion 47. The groove 47a passes through the mounting surface portion 47 in the top-bottom direction. The groove 47a extends from the recovery unit 32 to the specimen loading unit 33 along the second direction Y by passing by the supply unit 31.

The transfer-side pusher 48 is inserted into the groove 47a. The transfer-side pusher 48 is moved along the groove 47a by the transfer-side drive mechanism, which is not shown. This transfer-side pusher 48 abuts against the bottom end portion in the top-bottom direction of a specimen rack 90 mounted on the mounting surface portion 47. The specimen rack 90 supplied from the supply unit 31 or the recovery unit 32 and mounted on the mounting surface portion 47 is pushed by the transfer-side pusher 48 and is transferred toward the specimen loading unit 33. In this case, the specimen rack 90 is transferred in a direction substantially parallel with the longitudinal direction thereof.

The specimen loading unit 33 includes a specimen loading tray 45, a loading-side guide rail 46, and a loading-side transfer mechanism, which is not shown. The specimen loading tray 45 is formed in a planar shape, as in the supply tray 41. Both end portions of the specimen loading tray 45 in the second direction Y bend upward in the top-bottom direction. On the specimen loading tray 45, a specimen rack 90 transferred by the first transfer lane 34 is placed.

The loading-side guide rail 46 is disposed substantially at the center of the specimen loading tray 45 in the second direction Y. The loading-side guide rail 46 is disposed in parallel with the first direction X on one surface of the specimen loading tray 45. The engagement groove 90b of a specimen rack 90 slidably engages with the loading-side guide rail 46. The loading-side guide rail 46 prevents a specimen rack 90 from falling down and also guides the movement of the specimen rack 90.

The loading-side transfer mechanism, which is not shown, transfers a specimen rack 90 which is placed on the specimen loading tray 45 and which is engaged with the loading guide rail 46 along the first direction X. The loading-side transfer mechanism also temporarily stops transferring the specimen rack 90 at a dispensing position which is substantially at the center of the specimen loading tray 45 in the first direction X.

The second reader 37 is disposed near this dispensing position in the specimen loading unit 33. The second reader 37 reads the identifier 91a appended to a rack-side specimen container 91 transferred to the dispensing position.

The specimens contained in the rack-side specimen containers 91 are supplied to the specimen containers 21 stored in the sample turn table 2 or the dilution containers 23 stored in the dilution turn table 3 by the pipette provided in the biochemical analysis apparatus 1. The loading-side transfer mechanism transfers a specimen rack 90 from which specimens have been supplied to the specimen containers 21 or the dilution containers 23 to the end of the specimen loading unit 33 on the second side of the first direction X.

The second transfer lane 35 is disposed at the end of the specimen loading unit 33 on the second side of the first direction X. The second transfer lane 35 is disposed along the second direction Y at the end of the transfer device 30 on the second side of the first direction X. The second transfer lane 35 includes an endless transfer belt 35a and a driver, which is not shown. The transfer belt 35a of the second transfer lane 35 extends from the specimen loading unit 33 to the recovery unit 32 in parallel with the second direction Y.

The second transfer lane 35 transfers along the second direction Y a specimen rack 90 placed on the transfer belt 35a to the end of the recovery unit 32 on the second side of the first direction X.

In the above-described transfer device 30 of this embodiment, the transfer-side pusher 48 is used for transferring a specimen rack 90 in the first transfer lane 34. However, this is only an example. As in the second transfer lane 35, an endless transfer belt may be used for transferring a specimen rack 90 in the first transfer lane 34.

Conversely, a pusher inserted into a groove may be used for transferring a specimen rack 90 in the second transfer lane 35, as in the first transfer lane 34.

The recovery unit 32 includes a first recovery tray 51 corresponding to a first tray section, a second recovery tray 52 corresponding to a second tray section, a recovery-side pusher mechanism 53, a first-recovery-side guide rail 54, a guide rail movable mechanism 55, and a second-recovery-side guide rail 56.

The first recovery tray 51 is disposed on the second side of the first direction X with respect to the recovery unit 32. The second recovery tray 52 is disposed on the first side of the first direction X with respect to the recovery unit 32. The first transfer lane 34 is disposed between the first recovery tray 51 and the second recovery tray 52.

The second recovery tray 52 will first be discussed.

The second recovery tray 52 is formed in a planar shape which forms a substantially rectangle, as in the supply tray 41 and the specimen loading tray 45. Guide strips 52a are provided at both end portions of the second recovery tray 52 in the second direction Y. The guide strips 52a are formed by bending the end portions of the second recovery tray 52 vertically upward in the top-bottom direction.

The second-recovery-side guide rail 56 is provided substantially at the center of the second recovery tray 52 in the second direction Y. The second-recovery-side guide rail 56 is disposed in parallel with the first direction X on one surface of the second recovery tray 52. The second-recovery-side guide rail 56 extends from one end portion to the other end portion of the second recovery tray 52 in the first direction X.

The engagement groove 90b of a specimen rack 90 slidably engages with this second-recovery-side guide rail 56. The second-recovery-side guide rail 56 prevents a specimen rack 90 from falling down when the specimen rack 90 moves along the first direction X. The second-recovery-side guide rail 56 also guides, together with the two guide strips 52a, the movement of the specimen rack 90.

The specimen rack 90 is pushed by the recovery-side pusher mechanism 53 and is transferred from the first recovery tray 51 to the above-described second recovery tray 52.

The recovery-side pusher mechanism 53 includes a recovery-side pusher member 57, a pusher operating portion 58, and a driver, which is not shown. The recovery-side pusher member 57 has a pushing surface 57a, a retainer strip 57b, and a support surface 57c. The pushing surface 57a contacts the back surface of a specimen rack 90 on the trailing side of the transfer direction. The support surface 57c bends substantially vertically from the pushing surface 57a.

The retainer strip 57b is formed at an end portion of the pushing surface 57a opposite the end portion close to the support surface 57c. The retainer strip 57b bends substantially vertically from the end portion of the pushing surface 57a in a direction opposite the bending direction of the support surface 57c. The retainer strip 57b retains the bottom end portion in the top-bottom direction of a specimen rack 90 when the pushing surface 57a contacts the specimen rack 90.

The pushing surface 57a contacts the back surface of a specimen rack 90 and the retainer strip 57b retains the bottom end portion of the specimen rack 90. This can reliably hold the specimen rack 90. As a result, the specimen rack 90 can be prevented from falling down when it is pushed and transferred.

The support surface 57c is connected to the pusher operating portion 58. The pusher operating portion 58 is disposed on the first side of the second direction Y with respect to the first recovery tray 51 and the second recovery tray 52. The pusher operating portion 58 extends along the first direction Y. A driver, which is not shown, is provided in the pusher operating portion 58. When the driver starts to drive, the pusher operating portion 58 moves along the first direction X, which also causes the recovery-side pusher member 57 connected to the pusher operating portion 58 to move along the first direction X.

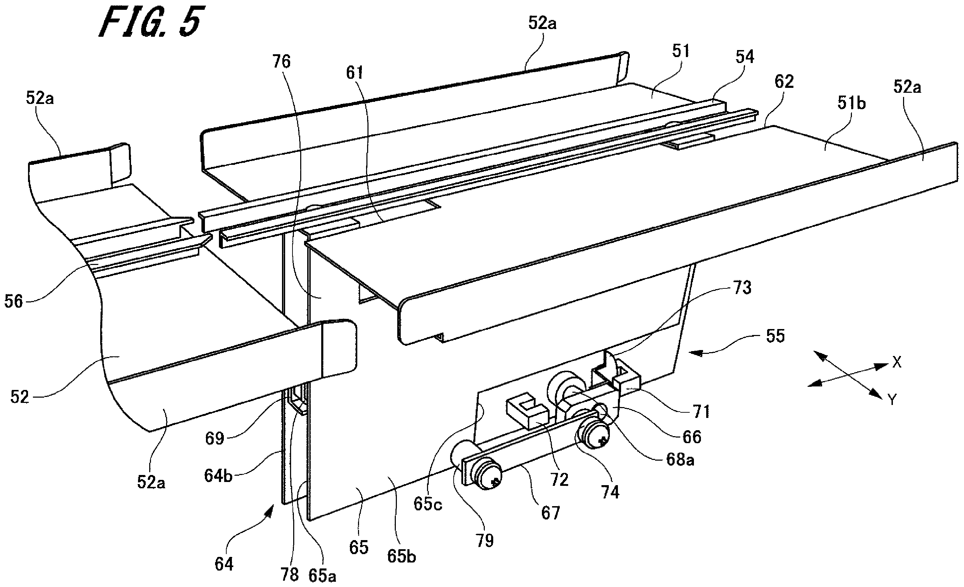

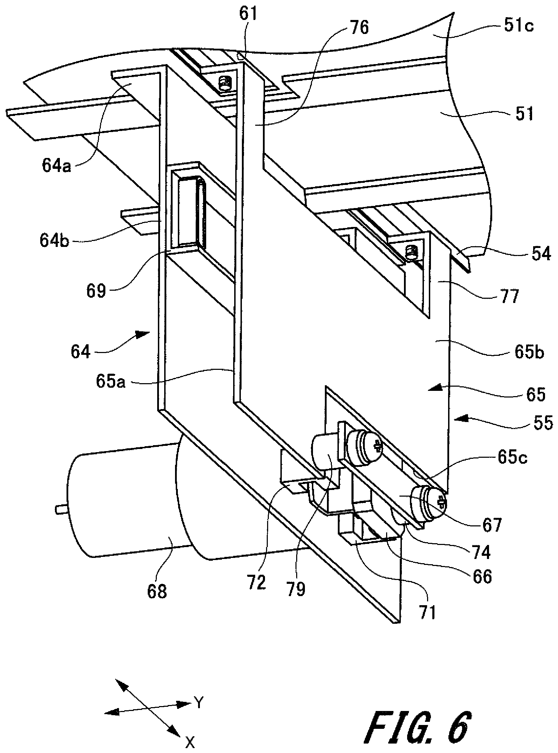

The detailed configurations of the first recovery tray 51, the first-recovery-side guide rail 54, and the guide rail movable mechanism 55 will be described below with reference to Figs. 5 and 6.

Figs. 5 and 6 are perspective views of the first recovery tray 51 and the guide rail movable mechanism 55, respectively.

As shown in Figs. 5 and 6, the first recovery tray 51 is formed in a planar shape which forms a substantially quadrilateral. Guide strips 51a are provided at both end portions of the first recovery tray 51 in the second direction Y. The guide strips 51a are formed by bending the end portions of the first recovery tray 51 vertically upward in the top-bottom direction.

A first opening 61 and a second opening 62 are formed in the first recovery tray 51. The first opening 61 is formed at an end portion of the first recovery tray 51 in the first direction X. The first opening 61 is formed substantially at the center of this end portion of the first recovery tray 51 in the second direction Y. The first opening 61 is opened in a predetermined size from this end portion of the first recovery tray 51 toward the second side of the first direction X.

The second opening 62 is formed at the other end portion of the first recovery tray 51 in the first direction X. The second opening 62 is formed substantially at the center of this end portion of the first recovery tray 51 in the second direction Y. The second opening 62 is opened in a predetermined size from this end portion of the first recovery tray 51 toward the first side of the first direction X.

The first-recovery-side guide rail 54 is disposed to cover the openings of the first opening 61 and the second opening 62. The first-recovery-side guide rail 54 is disposed in substantially parallel with the first direction X substantially at the center of the first recovery tray 51 in the second direction Y. The engagement groove 90b of a specimen rack 90 slidably engages with the first-recovery-side guide rail 54, in a manner similar to that in which the engagement groove 90b engages with the second-recovery-side guide rail 56. The first-recovery-side guide rail 54 prevents a specimen rack 90 from falling down when the specimen rack 90 moves along the first direction X. The first-recovery-side guide rail 54 also guides, together with the two guide strips 51a, the movement of the specimen rack 90.

The sectional area of the first-recovery-side guide rail 54 cut along the second direction Y is made slightly smaller than the opening area of the engagement groove 90b. A gap is thus formed between the first-recovery-side guide rail 54 and the engagement groove 90b. The size of the gap between the first-recovery-side guide rail 54 and the engagement groove 90b is decided so as not to let a specimen rack 90 fall down when the specimen rack 90 is moved.

The first-recovery-side guide rail 54 is supported by the guide rail movable mechanism 55 such that it is movable along the first direction X. The guide rail movable mechanism 55 includes a support plate 64, a movable plate 65, a crank 66, an arm member 67, a rail driver 68, and a support rail 69. The guide rail movable mechanism 55 also includes a first sensor 71 and a second sensor 72 connected to a controller, which is not shown.

The support plate 64 is formed in a planar shape. The support plate 64 is fixed to a back surface 51c of the first recovery tray 51 opposite a mounting surface 51b on which a specimen rack 90 is mounted. The support plate 64 is disposed substantially at the center of the back surface 51c in the second direction Y. The support plate 64 includes a fixed strip 64a and a main surface portion 64b. The fixed strip 64a is fixed to the back surface 51c. The main surface portion 64b is continuously provided from the fixed strip 64a and is positioned substantially vertically with respect to the fixed strip 64a.

When the fixed strip 64a is fixed to the back surface 51c, the main surface portion 64b of the support plate 64 protrudes from the back surface 51c substantially vertically. The main surface portion 64b of the support plate 64 is disposed in substantially parallel with a plane formed in the top-bottom direction and the first direction X.

The rail driver 68 is fixed to one surface of the main surface portion 64b of the support plate 64. A drive shaft 68a of the rail driver 68 passes through the main surface portion 64b of the support plate 64 from one surface to the other surface. The forward portion of the drive shaft 68a of the rail driver 68 protrudes from the other surface of the main surface portion 64b of the support plate 64. The crank 66 is attached to the forward portion of the drive shaft 68a.

When the rail driver 68 drives, the crank 66 is rotated together with the drive shaft 68a. A light-blocking strip 73 is provided on the crank 66. An interconnecting shaft 74 is also attached to the crank 66. The interconnecting shaft 74 is disposed at an eccentric position with respect to the center of rotation of the crank 66. One end portion of the arm member 67 is pivotably attached to the interconnecting shaft 74. The detailed configuration of the arm member 67 will be discussed alter.

The support rail 69 is fixed to the other surface of the main surface portion 64b of the support plate 64. The support rail 69 is disposed in substantially parallel with the first direction X on the other surface of the main surface portion 64b. The first sensor 71 and the second sensor 72 are also disposed on the other surface of the main surface portion 64b.

On the other surface of the main surface portion 64b, the first sensor 71 and the second sensor 72 are disposed in the first direction X with the drive shaft 68a and the crank 66 interposed therebetween with a predetermined spacing. The first sensor 71 and the second sensor 72 are optical sensors each including a light-emitting portion for emitting light and a light-receiving portion for receiving light emitted from the light-emitting portion. In this embodiment, optical sensors are used as the first sensor 71 and the second sensor 72. However, the first sensor 71 and the second sensor 72 are not restricted to optical sensors, and mechanical sensors may be used instead.

The first sensor 71 and the second sensor 72 detect the state of the first-recovery-side guide rail 54 as a result of light emitted from the light-emitting portions being blocked by the light-blocking strip 73.

The movable plate 65 is supported by the support rail 69 provided on the main surface portion 64b of the support plate 64 such that it is movable in the first direction X. The movable plate 65 opposes the main surface portion 64b of the support plate 64 in the second direction Y.

The movable plate 65 is formed in a planar shape which forms a substantially quadrilateral. The movable plate 65 includes a first support arm 76 and a second support arm 77. The first support arm 76 is provided at one end of the movable plate 65 in the longitudinal direction, that is, at one end in the first direction X. The second support arm 77 is provided at the other end of the movable plate 65 in the longitudinal direction, that is, at the other end in the second direction Y. The first support arm 76 and the second support arm 77 protrude from one end portion of the movable plate 65 in the short direction, that is, from the top end portion of the movable plate 65 in the top-bottom direction.

The first-recovery-side guide rail 54 is fixed to the first support arm 76 and the second support arm 77. The first support arm 76 is fixed to one end portion of the first-recovery-side guide rail 54 in the longitudinal direction. The second support arm 77 is fixed to the other end portion of the first-recovery-side guide rail 54 in the longitudinal direction.

When the movable plate 65 is fixed to the support plate 64, the first support arm 76 faces the first opening 61 formed in the first recovery tray 51, while the second support arm 77 faces the second opening 62 formed in the first recovery tray 51. In this case, the first-recovery-side guide rail 54 is mounted on the mounting surface 51b of the first recovery tray 51.

A slider 78 and a pivot shaft 79 are attached to the movable plate 75. The slider 78 is fixed on an opposing surface 65a of the movable plate 65 which opposes the main surface portion 64b of the support plate 64. The slider 78 is movably supported by the support rail 69. Hence, the movable plate 65 is supported by the support plate 64 such that it is movable in the first direction X.

The pivot shaft 79 is fixed to the other surface 65b of the movable plate 65 opposite the opposing surface 65a. A cutout 65c is formed at the other end portion of the movable plate 65 in the short direction, that is, at the bottom end portion of the movable plate 65 in the top-bottom direction. The cutout 65c is formed by cutting out the other end portion of the movable plate 65 on the second side of the first direction X. The provision of the cutout 65c can prevent the movable plate 65 from contacting the first sensor 71, the second sensor 72, the crank 66, and the drive shaft 68a provided on the support plate 64 and the movable plate 65 when the movable plate 65 is moved along the first direction X.

The pivot shaft 79 is positioned at one outer edge of the cutout 65c on the first side of the first direction X. The arm member 67 is pivotably supported by the pivot shaft 79. The arm member 67 is formed in a planar shape which forms a substantially rectangle. One end portion of the arm member 67 in the longitudinal direction is pivotably supported by the pivot shaft 79. The other end portion of the arm member 67 in the longitudinal direction is pivotably supported by the interconnecting shaft 74 provided on the crank 66. A drive force of the rail driver 68 is transferred to the movable plate 65 via the arm member 67.

### 1-4. Operation Example of Recovery Unit

An example of the operation of the recovery unit 32 configured as described above will be discussed below with reference to Figs. 2 through 7.

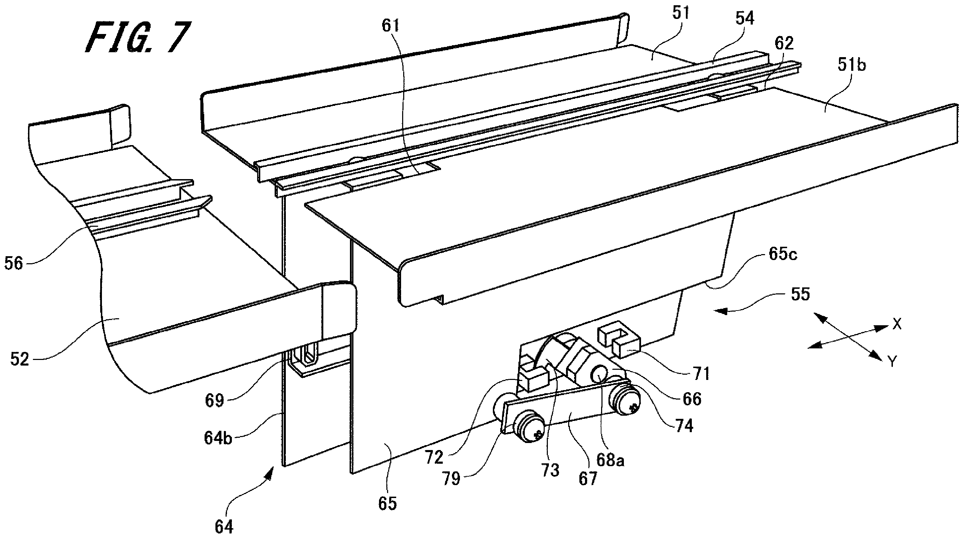

Fig. 7 is a perspective view illustrating a state in which the first-recovery-side guide rail 54 is moved to the second side of the first direction X.

As shown in Fig. 5, prior to a state in which the rail driver 68 of the guide rail movable mechanism 55 starts to drive, the light-blocking strip 73 is disposed between the light-receiving portion and the light-emitting portion of the first sensor 71. In this case, the first-recovery-side guide rail 54 is positioned close to the second-recovery-side guide rail 56. Accordingly, as shown in Figs. 2 and 3, one end portion of the first-recovery-side guide rail 54 in the longitudinal direction, that is, one end portion of the first-recovery-side guide rail 54 in the first direction X, is mounted on the mounting surface portion 47 of the first transfer lane 34. The first-recovery-side guide rail 54 is thus connected to the second-recovery-side guide rail 56 across the mounting surface portion 47 of the first transfer lane 34 in the first direction X.

With this configuration, a specimen rack 90 transferred from the first recovery tray 51 along the first direction X can be transferred until the second recovery tray 52 without being caught by the mounting surface portion 47 of the first transfer lane 34. As a result, the specimen rack 90 can be prevented from falling down while it is being transferred.

Then, when the rail driver 68 starts to drive, the crank 66 fixed to the drive shaft 68a is rotated. Then, the arm member 67 interconnected to the crank 66 via the interconnecting shaft 74 pivots. By this pivoting operation of the arm member 67, the movable plate 65 shifts along the first direction X with respect to the support plate 64, as shown in Fig. 7. This causes the first-recovery-side guide rail 54 attached to the movable plate 65 to shift in a direction in which the first-recovery-side guide rail 54 separates from the second-recovery-side guide rail 56 along the first direction X.

The end portion of the first-recovery-side guide rail 54 that has been mounted on the mounting surface portion 47 of the first transfer lane 34 retreats toward the first recovery tray 51. As a result, the transfer-side pusher 48 of the first transfer lane 34 can push the specimen rack 90 mounted on the mounting surface portion 47 of the first transfer lane 34 so that the specimen rack 90 can be transferred along the second direction Y. In this state, the light-blocking strip 73 is disposed between the light-receiving portion and the light-emitting portion of the second sensor 72.

If the rail driver 68 is a DC motor, the controller, which is not shown, outputs a drive instruction to the rail driver 68 and causes the rail driver 68 to drive. The controller then detects the position of the first-recovery-side guide rail 54, based on detection signals from the first sensor 71 and the second sensor 72. When the first-recovery-side guide rail 54 has moved to a predetermined position, the controller causes the rail driver 68 to stop driving.

If the rail driver 68 is a pulse motor, the controller first generates a pulse signal for causing the rail driver 68 to drive. Then, the controller causes the rail driver 68 to drive and then to stop driving, based on the generated pulse signal. In this state, the controller checks the actual position of the first-recovery-side guide rail 54, based on detection signals from the first sensor 71 and the second sensor 72. If the actual position of the first-recovery-side guide rail 54 is displaced from a desired position, the controller stops the operation of the transfer device 30. The controller then supplies error information to a user. This enables the transfer device 30 to operate more safely.

### 2. Operation Example of Specimen Rack Transfer Device

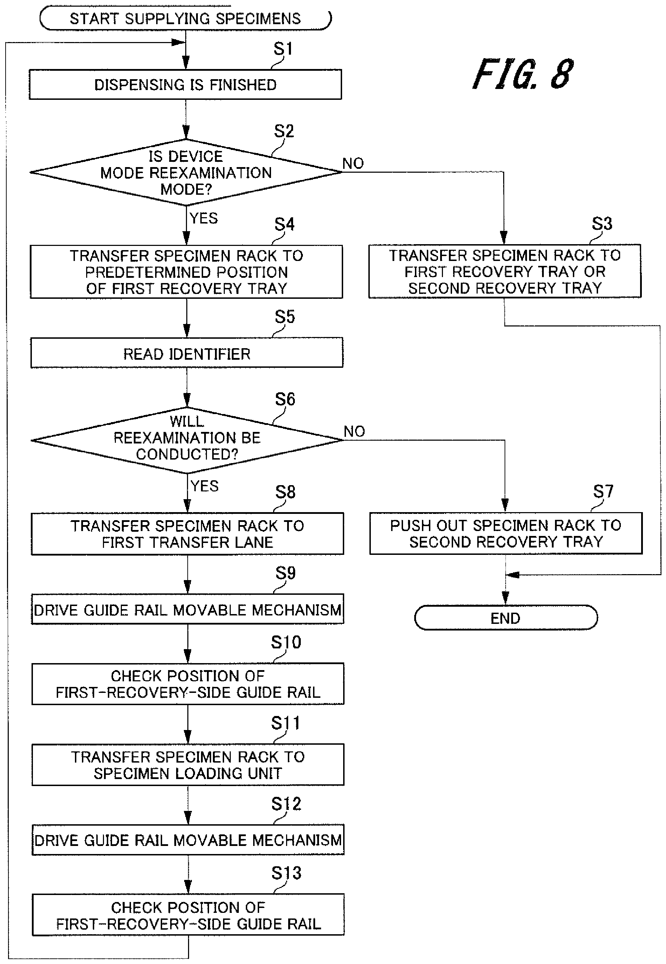

An example of the operation of the transfer device 30 configured as described above will be discussed below with reference to Figs. 8 through 11. A description will be given below mainly of the operation after the transfer device 30 has supplied specimens to the biochemical analysis apparatus 1 at the dispensing position of the specimen loading unit 33.

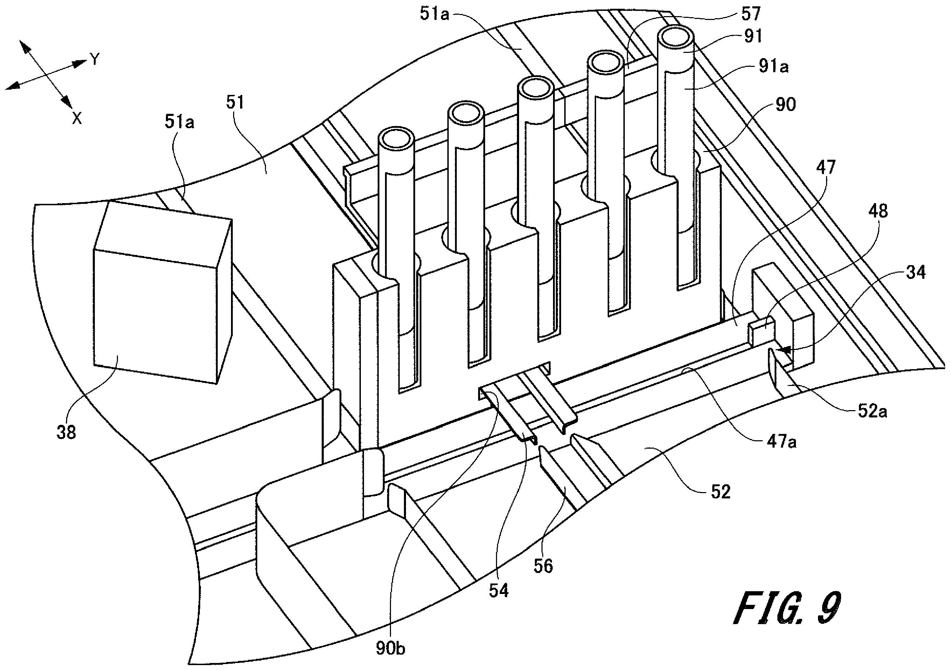

Fig. 8 is a flowchart illustrating the operation of the transfer device 30. Figs. 9 through 11 are perspective views illustrating the operation of the transfer device 30 when reexamination is conducted.

First, a specimen rack 90 supplied to the supply unit 31 is transferred to the first transfer lane 34 and is further transferred to the specimen loading unit 33 by using the first transfer lane 34. Then, the specimen rack 90 is transferred to the dispensing position in the specimen loading unit 33, and specimens stored in the rack-side specimen containers 91 are supplied to the biochemical analysis apparatus 1. Then, dispensing of the specimens stored in the rack-side specimen containers 91 is finished (step S1).

After finishing dispensing of the specimens, the controller determines whether a preset device mode is a reexamination mode or a reexamination-free mode (step S2). In operation of step S2, if the controller determines that the preset device mode is the reexamination-free mode (NO in step S2), the controller causes the specimen rack 90 to be transferred from the specimen loading unit 33 to the recovery unit 32 via the second transfer lane 35. The controller then controls the recovery-side pusher mechanism 53 of the recovery unit 32 so that the recovery-side pusher mechanism 53 can transfer the specimen rack 90 to the first recovery tray 51 or the second recovery tray 52 (step S3). Then, the transfer operation for this specimen rack 90 has been completed.

In operation of step S2, if the controller determines that the preset device mode is the reexamination mode, the controller causes the specimen rack 90 to be transferred to the first recovery tray 51, which is a reexamination buffer, in the recovery unit 32. The controller then controls the recovery-side pusher mechanism 53 of the recovery unit 32 so that the recovery-side pusher mechanism 53 can transfer the specimen rack 90 to a predetermined position of the first recovery tray 51 (step S4).

The predetermined position of the first recovery tray 51 is the end of the first recovery tray 51 on the first side of the first direction X, namely, a position near the first transfer lane 34, as shown in Fig. 9. That is, the predetermined position is a leading position of the first recovery tray 51 in the transfer direction. Then, the controller causes the third reader 38 to read the identifier 91a appended to the rack-side specimen container 91 (step S5). The controller then determines whether reexamination will be conducted, based on information concerning the read identifier 91a (step S6). This determination may be made based on an external recording server, an instruction from the biochemical analysis apparatus, or information input by a user, for example.

In operation of step S6, if the controller determines that reexamination will not be conducted (NO in step S6), the controller controls the recovery-side pusher mechanism 53 so that the specimen rack 90, which is not required for reexamination, can be pushed out to the second recovery tray 52 (step S7). Then, the transfer operation for this specimen rack 90 has been completed.

In this state, the end portion of the first-recovery-side guide rail 54 on the first side of the first direction X is mounted on the mounting surface portion 47 of the first transfer lane 34, and the first-recovery-side guide rail 54 and the second-recovery-side guide rail 56 are connected to each other. Thus, the specimen rack 90 can smoothly be pushed out without being caught by the mounting surface portion 47 and the end portion of the second-recovery-side guide rail 56 on the second side of the first direction X.

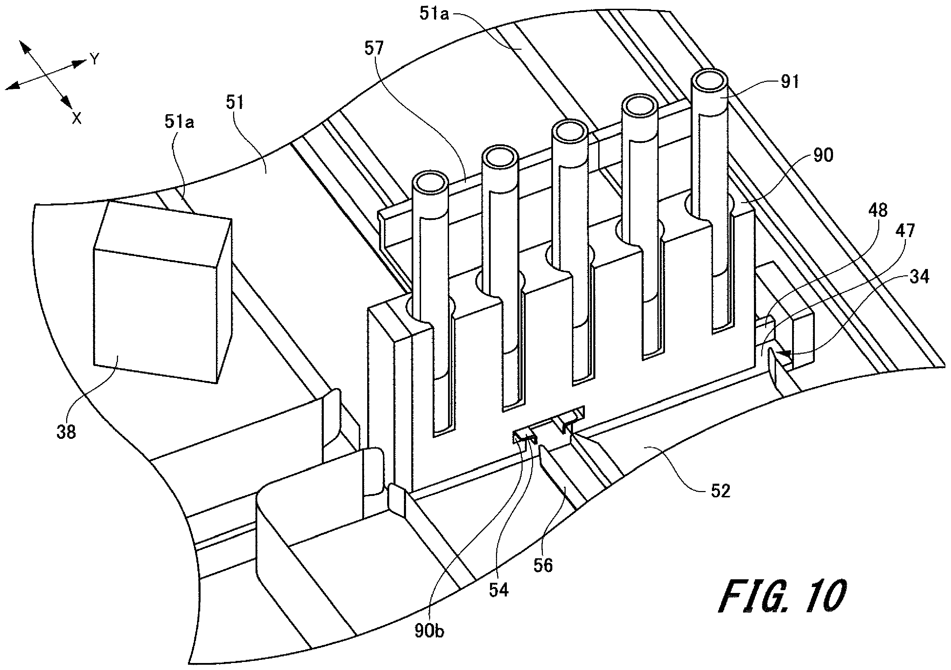

In operation of step S6, if the controller determines that reexamination will be conducted (YES in step S6), the controller controls the recovery-side pusher mechanism 53 so that the recovery-side pusher mechanism 53 can transfer the specimen rack 90 onto the mounting surface portion 47 of the first transfer lane 34, as shown in Fig. 10 (step S8). In this state, the end portion of the first-recovery-side guide rail 54 on the first side of the first direction X is mounted on the mounting surface portion 47. Hence, the first-recovery-side guide rail 54 can support the specimen rack 90 so that the specimen rack 90 can be prevented from falling down, even without the presence of the guide strips 52a which support both sides of the specimen rack 90 in the longitudinal direction.

When the specimen rack 90 has been transferred onto the mounting surface portion 47 of the first transfer lane 34, the controller causes the guide rail movable mechanism 55 to start driving (step S9). The guide rail movable mechanism 55 drives the first-recovery-side guide rail 54 to move in a direction in which it separates from the second-recovery-side guide rail 56. The first-recovery-side guide rail 54 can thus be pulled out of the engagement groove 90b of the specimen rack 90.

The first-recovery-side guide rail 54 is made slightly smaller than the engagement groove 90b. This configuration allows the first-recovery-side guide rail 54 to be pulled out of the engagement groove 90b of the specimen rack 90 without being caught by the engagement groove 90b.

Then, the controller checks the position of the first-recovery-side guide rail 54, based on detection signals from the first sensor 71 and the second sensor 72 of the guide rail movable mechanism 55 (step S10). In this case, the controller causes the guide rail movable mechanism 55 to continue driving until the light-blocking strip 73 is inserted between the light-receiving portion and the light-emitting portion of the second sensor 72, as shown in Fig. 7.

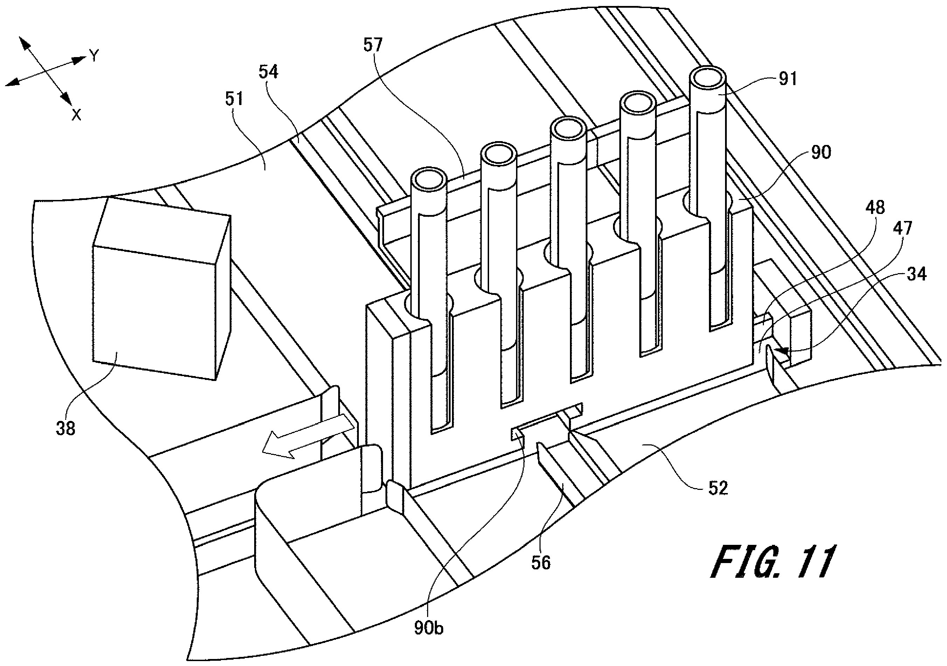

If the controller determines that the first-recovery-side guide rail 54 has been pulled out of the engagement groove 90b and is not mounted on the mounting surface portion 47, as shown in Fig. 11, the controller causes the specimen rack 90 to be transferred to the specimen loading unit 33 (step S11). That is, the controller causes the transfer-side drive mechanism of the first transfer lane 34 to drive the transfer-side pusher 48 so that the specimen rack 90 can be transferred along the second direction Y. With this operation, when the transfer direction of the specimen rack 90 is switched from the first direction X to the second direction Y, the specimen rack 90 can be transferred safely while being prevented from falling down.

When the specimen rack 90 has been transferred to the specimen loading unit 33, the controller causes the guide rail movable mechanism 55 to start driving again (step S12). That is, the controller causes the first-recovery-side guide rail 54 to move along the first direction X to approach the second-recovery-side guide rail 56 of the second recovery tray. Then, the end portion of the first-recovery-side guide rail 54 is remounted on the mounting surface portion 47 of the first transfer lane 34.

Then, the controller checks the position of the first-recovery-side guide rail 54, based on detection signals from the first sensor 71 and the second sensor 72 (step S13). In this case, the controller causes the guide rail movable mechanism 55 to continue driving until the light-blocking strip 73 is inserted between the light-receiving portion and the light-emitting portion of the first sensor 71, as shown in Fig. 5.

The controller then returns to operation of step S1 and repeats the above-described processing on a specimen rack 90 transferred to the specimen loading unit 33.

In the transfer device 30 according to this embodiment, when the transfer direction of a specimen rack 90 is switched from the first direction X to the second direction Y, the first-recovery-side guide rail 54 supports the specimen rack 90 until the specimen rack 90 is transferred onto the mounting surface portion 47. As a result, the specimen rack 90 can be prevented from falling down.

When the specimen rack 90 has been transferred onto the mounting surface portion 47, the first-recovery-side guide rail 54 is pulled out of the engagement groove 90b of the specimen rack 90 and retreats from the mounting surface portion 47. As a result, when the specimen rack 90 is transferred in the second direction Y, it can be transferred safely without letting the first-recovery-side guide rail 54 hinder the transfer operation of the specimen rack 90.

The present invention is not restricted to the embodiment described above and illustrated in the drawings. Various modifications may be made without departing from the spirit and scope of the invention recited in the claims. For example, in the above-described embodiment, the automatic analysis apparatus is applied to a biochemical analysis apparatus used for analyzing biological samples, such as blood and urine. However, the automatic analysis apparatus is not restricted to this type of apparatus, and may be applicable to apparatuses for conducting analysis for different purposes, such as those for analyzing food and the quality of water. Additionally, the automatic analysis apparatus may be applicable to an immunoassay analysis apparatus for conducting immunoassay analysis, such as analysis for antigen-antibody interaction of a specimen.

In the above-described embodiment, the guide rail movable mechanism 55 for moving the guide rail is applied to the first recovery tray of the recovery unit 32 which is used for reexamination. However, the guide rail movable mechanism 55 may be applied to another unit, such as the supply unit or the specimen loading unit having plural portions for discharging a specimen rack 90.

In the above-described embodiment, the entirety of the first-recovery-side guide rail 54 is moved in the first direction X. However, the first-recovery-side guide rail 54 is not restricted to this type of guide rail. For example, a guide rail having elasticity in the longitudinal direction may be applied. In this case, only elastic part of the guide rail is moved, thereby making it possible to reduce vibrations which occur during the movement or the expansion and contraction of the guide rail.

In the above-described embodiment, when one end portion of the first-recovery-side guide rail 54 retreats from the mounting surface portion 47 as a result of moving the first-recovery-side guide rail 54, the other end portion of the first-recovery-side guide rail 54 is placed on the transfer belt 35a of the second transfer lane 35. When transferring a specimen rack 90 from the second transfer lane 35 to the first recovery tray 51, the first-recovery-side guide rail 54 is moved toward the second transfer lane 35. This allows the other end portion of the first-recovery-side guide rail 54 to be inserted into the engagement groove 90b of the specimen rack 90 positioned on the second transfer lane 35. As a result, the specimen rack 90 can smoothly be transferred from the second transfer lane 35 to the first recovery tray 51. It is thus possible to prevent the specimen rack 90 from falling down when the specimen rack 90 is transferred.

### Reference Signs List

1 biochemical analysis apparatus (automatic analysis apparatus), 30 specimen rack transfer device, 31 supply unit, 32 recovery unit, 33 specimen loading unit, 34 first transfer lane (transfer lane), 35 second transfer lane, 36 first reader, 37 second reader, 38 third reader, 51 first recovery tray (tray section), 51a guide strip, 51b mounting surface, 51c back surface, 52 second recovery tray (second tray section), 52a guide strip, 53 recovery-side pusher mechanism, 54 first-recovery-side guide rail (guide rail), 55 guide rail movable mechanism, 56 second-recovery-side guide rail, 57 recovery-side pusher member, 61 first opening, 62 second opening, 64 support plate, 65 movable plate, 66 crank, 67 arm member, 68 rail driver, 68a drive shaft, 69 support rail, 71 first sensor, 72 second sensor, 73 light-blocking strip, 74 interconnecting shaft, 76 first support arm, 77 second support arm, 78 slider, 79 pivot shaft, 90 specimen rack, 90a storage portion, 90b engagement groove, 91 rack-side specimen container, 91a identifier, 100 biochemical analysis system, X first direction, Y second direction

## Claims

1. A specimen rack transfer device comprising:
a tray section that places a specimen rack thereon, the specimen rack being used for storing a plurality of specimen containers;
a pusher mechanism that transfers the specimen rack placed on the tray section along a first direction, the first direction intersecting a direction in which the plurality of specimen containers are arranged;
a transfer lane that is disposed on a first side of the first direction with respect to the tray section and that transfers the specimen rack along a second direction, the second direction being perpendicular to the first direction;
a guide rail that is provided on the tray section and that slidably engages with an engagement groove of the specimen rack so as to guide the specimen rack along the first direction, the engagement groove being provided in a bottom end portion of the specimen rack in a top-bottom direction; and
a guide rail movable mechanism that supports at least part of the guide rail such that the at least part of the guide rail is movable along the first direction.

2. The specimen rack transfer device according to Claim 1, further comprising:
a second tray section that is disposed on the first side of the first direction with respect to the tray section, the transfer lane being interposed between the second tray section and the first tray section; and
a second guide rail that is provided on the second tray section and that slidably engages with the engagement groove so as to guide the specimen rack along the first direction,
wherein the guide rail movable mechanism moves the guide rail to the second guide rail across the transfer lane.

3. The specimen rack transfer device according to Claim 2, wherein, when the specimen rack is transferred from the tray section to the second tray section, the guide rail movable mechanism moves the end portion of the guide rail to the second guide rail.

4. The specimen rack transfer device according to Claim 3, wherein, when the specimen rack is transferred from the tray section to the transfer lane, the guide rail movable mechanism moves the guide rail onto the transfer lane so that the specimen rack is transferred onto the transfer lane, and when the specimen rack has been transferred onto the transfer lane, the guide rail movable mechanism moves the guide rail to a position at which the guide rail is separated from the transfer lane.

5. The specimen rack transfer device according to Claim 1, wherein the guide rail movable mechanism supports entirety of the guide rail so that the entirety of the guide rail is movable along the first direction.

6. The specimen rack transfer device according to Claim 1, wherein a sectional area of the guide rail cut along the second direction is made smaller than an opening area of the engagement groove.

7. An automatic analysis system comprising:
an automatic analysis apparatus that analyzes a specimen stored in a specimen container; and
a specimen rack transfer device that transfers a specimen rack in which the specimen container is stored,
the specimen rack transfer device including
a tray section that places a specimen rack thereon, the specimen rack being used for storing a plurality of specimen containers,
a pusher mechanism that transfers the specimen rack placed on the tray section along a first direction, the first direction intersecting a direction in which the plurality of specimen containers are arranged,
a transfer lane that is disposed on a first side of the first direction with respect to the tray section and that transfers the specimen rack along a second direction, the second direction being perpendicular to the first direction,
a guide rail that is provided on the tray section and that slidably engages with an engagement groove of the specimen rack so as to guide the specimen rack along the first direction, the engagement groove being provided in a bottom end portion of the specimen rack in a top-bottom direction, and
a guide rail movable mechanism that supports at least part of the guide rail such that the at least part of the guide rail is movable along the first direction.
